# EUROPEAN PATENT SPECIFICATION

(11) **EP 2 712 262 B1**
(45) Date of publication and mention of the grant of the patent: **09.12.2015**
(21) Application number: 12800906.5
(22) Date of filing: 15.06.2012
(51) Int. Cl.: H04W 24/02

(54) **NETWORK ATTACH METHOD AND APPARATUS THEREOF FOR RELAY NODE**
NETZWERKVERBINDUNGSVERFAHREN UND VORRICHTUNG DAMIT FÜR EINEN RELAISKNOTEN
PROCÉDÉ DE JONCTION À UN RÉSEAU ET APPAREIL ASSOCIÉ POUR UN NOEUD RELAIS

(30) Priority: 16.06.2011 CN 201110162663
(43) Date of publication of application: 26.03.2014
(73) Proprietor: Huawei Technologies Co., Ltd., Longgang District Shenzhen, Guangdong 518129 (CN)
(72) Inventor: LIU, Jing, Shenzhen Guangdong 518129 (CN); PENG, Yan, Shenzhen Guangdong 518129 (CN)
(74) Representative: Isarpatent
(86) International application number: PCT/CN2012/076956
(87) International publication number: WO 2012/171476

(56) References cited:
- CN-A- 101 827 451
- CN-A- 101 932 120
- CN-A- 101 964 970
- CN-A- 102 083 178
- CN-A- 102 088 756
- CN-A- 102 378 393
- RAN3 (HUAWEI ET AL: "eNB Configuration Update procedure in RN startup and detach procedure", 3GPP DRAFT; 36300_CR0290_(REL-10)_R2-106951_R3-103165, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 24 November 2010 (2010-11-24), XP050492615, [retrieved on 2010-11-24]
- HUAWEI ET AL: "DeNB and MME Selection", 3GPP DRAFT; R3-102042 DENB AND MME SELECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Madrid, Spain; 20100823, 15 August 2010 (2010-08-15), XP050452935, [retrieved on 2010-08-15]
- HUAWEI ET AL: "On the Selection of RN-UE's MME", 3GPP DRAFT; R3-101871 ON THE SELECTION OF RN-UE'S MME_HW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Beijing; 20100629, 23 June 2010 (2010-06-23), XP050453782, [retrieved on 2010-06-23]
- ZTE: "Two-Phase RN Start-up Procedure", 3GPP DRAFT; R3-102734 TWO-PHASE RN START-UP PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 1 October 2010 (2010-10-01), XP050453466, [retrieved on 2010-10-01]
- ZTE: "Detailed Considerations on RN Attachment", 3GPP DRAFT; R3-102176 - DETAILED CONSIDERATIONS ON RN ATTACHMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Madrid, Spain; 20100823, 15 August 2010 (2010-08-15), XP050453053, [retrieved on 2010-08-15]
- MCC: "Report of 3GPP TSG RAN WG3 meeting #70", 3GPP DRAFT; RAN3#70_FINAL_REPORT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Dublin, Ireland; 20110117, 17 January 2011 (2011-01-17), XP050496978, [retrieved on 2011-01-17]
- ZTE CORP: 'Two-Phase RN Start-up Procedure' 3GPP TSG-RAN WG3 #69BIS, R3-102734 15 October 2010, XP050453466

## Description

### TECHNICAL FIELD

The present invention relates to the field of communications technologies, and in particular, to a network attach method for a relay node (Relay Node, RN), a related apparatus, and a network system.

### BACKGROUND

In the prior art, a network attach procedure for an RN includes two stages:

The first stage includes the following process: The RN randomly selects a cell for access, and sets up a connection with a base station to which the cell belongs; the base station selects a mobility management entity (Mobility Management Entity, MME) serving the RN; the MME exchanges information with a domain name system (Domain Name System, DNS) server, and selects a serving gateway (Serving Gateway, S-GW) or a public data network gateway (Public Data Network Gateway, P-GW) serving the RN. Through the S-GW/P-GW, the RN obtains, from an Operations, Administration and Maintenance (Operations Administration and Maintenance, OAM) server to which the RN belongs, a list of donor base station (Donor eNodeB, DeNB) cells that allow being accessed by the RN. Then the RN executes a procedure for network detach to leave the accessed cell.

The second stage includes the following process: From the list of DeNB cells obtained in the first stage, the RN selects a cell for access, and sets up a connection with an internal base station module of the DeNB to which the cell belongs. The internal base station module of the DeNB selects an MME supporting a relay function for the RN, and determines an internal S-GW/P-GW of the DeNB as an S-GW/P-GW serving the RN, and the MME sets up a bearer with the S-GW/P-GW.

In the prior art, the network attach procedure of the RN includes two stages, which greatly increases the delay of network attach of the RN, and also causes a certain resource waste.

The patent applications, CN102088756 A and corresponding US2012/315913 A1, disclose a method for selecting a donor cell, and the method comprises the following steps: a relay node (RN) acquires the donor cell configuration for the relay node; if the RN determines, that the currently serving cell is listed in the donor cell configuration information, the RN continues to work in the cell; otherwise, the RN selects another cell listed in the donor cell configuration information to access.

The patent applications, CN102083178 A and corresponding EP2568752 A1, disclose a method for transmitting boot-up phase instruction and selecting gateway node. The method comprises: an MME determines whether information, transmitted from an RN or an eNB, for indicating the startup phase which the RN is currently performing is received during RN attach procedure, and the MME selects a legacy SGW and a legacy PGW as gateway nodes of the RN upon judging that the RN is currently performing a startup phase I; and selects the DeNB of the RN as PGW and SGW of the RN upon judging that the RN is currently performing a startup phase II.

### SUMMARY

In accordance with the present invention a network attach method as set forth in claim 1, a network attach method as set forth in claim 5, a relay node as set forth in claim 8 and a mobility management device as set forth in claim 11 are provided. Embodiments of the invention are described in the dependent claims.

### BRIEF DESCRIPTION OF DRAWINGS

To illustrate the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a flowchart of a network attach method for an RN according to an embodiment of the present invention;
FIG. 2 is a flowchart of a specific network attach method for an RN based on the embodiment shown in FIG. 1 according to an embodiment of the present invention;
FIG. 3 is a flowchart of another specific network attach method for an RN based on the embodiment shown in FIG. 1 according to an embodiment of the present invention;
FIG. 4 is a flowchart of another network attach method for an RN according to an embodiment of the present invention;
FIG. 5 is a flowchart of a specific network attach method for an RN based on the embodiment shown in FIG. 4 according to an embodiment of the present invention;
FIG. 6 is a structural diagram of a relay node RN according to an embodiment of the present invention;
FIG. 7 is a structural diagram of a mobility management device according to an embodiment of the present invention;
FIG. 8 is a structural diagram of a network system according to an embodiment of the present invention; and
FIG. 9 is a structural diagram of another network system according to an embodiment of the present invention.

### DESCRIPTION

The subsequent examples provide a network attach method for an RN, a relay node, a mobility management device, and a network system. The technical solutions provided by the subsequent examples may be applicable to a long term evolution (Long Term Evolution, LTE) network and a future evolution of the LTE network, for example, an LTE Advanced (advanced) network, and may be also applicable to a universal mobile telecommunications system (Universal Mobile Telecommunications System, UMTS) network, but are not limited to the mentioned networks. The methods provided by the examples may optimize the existing network attach procedure of an RN, reduce the network attach time of the RN, and save network resources.

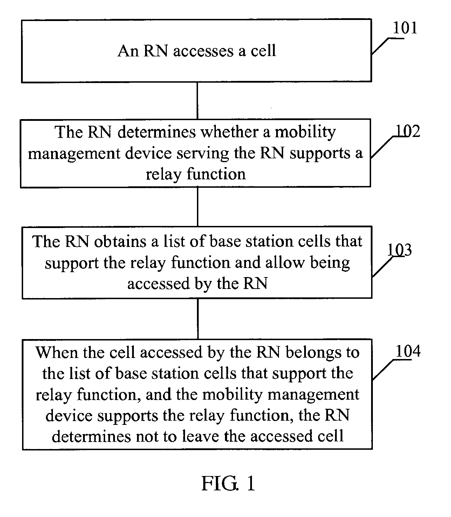

FIG. 1 illustrates a network attach method for an RN according to an example, where the method mainly includes:
Step 101: An RN accesses a cell.

The RN may access a cell in the following way: The RN randomly selects a cell to access, where the cell may be a cell of a base station that does not support a relay function, for example, a cell of an eNodeB that does not support a relay function, which may be marked as an eNodeB cell; or the cell randomly accessed by the RN may be a cell of a base station cell that supports a relay function, for example, a cell of a donor base station DeNB, which may be marked as a DeNB cell.
Step 102: The RN determines whether a mobility management device serving the RN supports a relay function.

The RN may determine, according to a radio resource configuration message sent by a base station of the cell, whether the mobility management device serving the RN supports a relay function. The radio resource configuration message may be a radio resource control connection reconfiguration (RRC Connection Reconfiguration) message.

The mobility management device serving the RN may be selected by the base station of the cell for the RN, for example, the mobility management device may be an MME in an LTE network or LTE-evolved network, or an SGSN (Serving GPRS Support Node, serving GPRS support node) in a UMTS network.

For example, the step may be implemented in the following two modes:

The first mode: The RN determines, according to non-access stratum NAS information carried in the radio resource configuration message, whether the mobility management device serving the RN supports a relay function, where the NAS information is sent by the mobility management device to the base station of the cell and is added by the base station of the cell to the radio resource configuration message. The NAS information may be attach accept (Attach Accept) information.

In an implementation manner, the NAS information carries indication information indicating whether the mobility management device serving the RN supports a relay function, and the RN determines, according to the indication information, whether the mobility management device serving the RN supports a relay function. In another implementation manner, the RN determines whether the NAS information carries first indication information, where the first indication information indicates that the mobility management device serving the RN supports a relay function; if the NAS information carries the first indication information, the RN determines that the mobility management device serving the RN supports a relay function; if the NAS information does not carry the first indication information, the RN determines that the mobility management device serving the RN does not support a relay function. The indication information indicating whether the mobility management device serving the RN supports a relay function and the first indication information are added by the mobility management device to the NAS information and sent to the base station, and then the base station adds the NAS information to the radio resource configuration message sent to the RN.

The second mode: The RN determines, according to information other than the NAS information carried in the radio resource configuration message, whether the mobility management device serving the RN supports a relay function. The NAS information may be attach accept (Attach Accept) information.

In an implementation manner, the information other than the NAS information carried in the radio resource configuration message includes indication information indicating whether the mobility management device serving the RN supports a relay function; the RN determines, according to the indication information, whether the mobility management device serving the RN supports a relay function. In another implementation manner, the RN determines whether the information other than the NAS information carried in the radio resource configuration message includes second indication information, where the second indication information indicates that the mobility management device serving the RN supports a relay function; if yes, the RN determines that the mobility management device serving the RN supports a relay function; if no, the RN determines that the mobility management device serving the RN does not support a relay function, where the radio resource configuration message that does not include the second indication information may be the same as the radio resource configuration message in the prior art. The indication information indicating whether the mobility management device serving the RN supports a relay function and the second indication information are added by the base station to the radio resource configuration message.
Step 103: The RN obtains a list of base station cells that support a relay function and allow being accessed by the RN.

For example, the list of base station cells that support a relay function and allow being accessed by the RN may be a list of DeNB cells that allow being accessed by the RN.

For example, the RN may obtain, through a gateway, the list of DeNB cells that allow being accessed by the RN; if the RN in step 101 accesses a DeNB cell, the RN may obtain, from an OAM through an internal S-GW or P-GW gateway of the DeNB, a list of DeNB cells that allow being accessed by the RN. If the RN accesses an eNodeB cell, the RN may obtain, from the OAM through an S-GW or P-GW gateway, a list of DeNB cells that allow being accessed by the RN, where the S-GW or P-GW is not the internal S-GW or P-GW gateway of the DeNB.
Step 104: When the cell accessed by the RN belongs to the list of base station cells that support a relay function, and the mobility management device supports a relay function, the RN determines not to leave the accessed cell.

When the cell accessed by the RN does not belong to the list of base station cells that support a relay function, or the mobility management device does not support a relay function, the RN determines to leave the accessed cell, and accesses a cell in the list of base station cells that support a relay function.

In the example, when the cell accessed by the RN is a base station cell that supports a relay function and allows being accessed by the RN, and the mobility management device serving the RN supports a relay function, the RN determines not to leave the accessed cell. Thereby, the RN does not need to execute the network reattach procedure in the second stage of the network attach procedure of the RN in the prior art, thereby optimizing the existing network attach procedure of the RN, reducing network attach time of the RN, and saving network resources.

To make the technical solution provided by the foregoing embodiment more comprehensible, the technical solution is described in detail with reference to two embodiments.

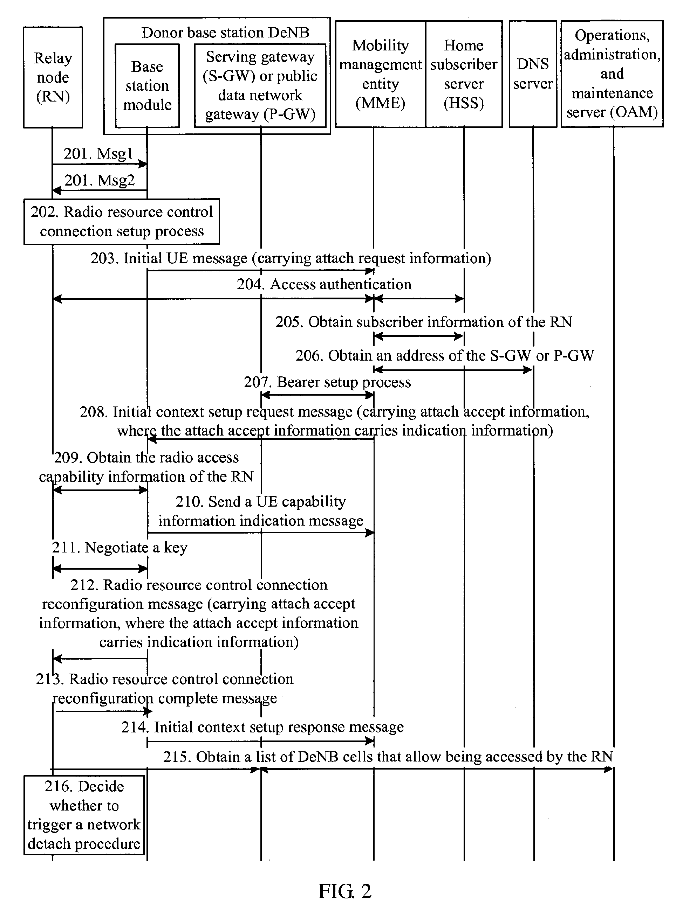

FIG. 2 illustrates a network attach method for an RN according to an example, where the method includes:
Step 201: An RN randomly accesses a cell, and sends a message 1 (Message 1, Msg1) to a base station of the cell, where the Msg1 carries a random access preamble (Preamble); after receiving the Msg1, the base station configures uplink resources for the RN, allocates timing information (Time Alignment) and cell radio network temporary identifier (Cell Radio Network Temporary Identifier, C-RNTI), and sends the uplink resource information, timing information, and C-RNTI configured for the RN to the RN through a message 2 (Message 2, Msg2).

In this process, the base station of the cell randomly accessed by the RN may be a base station that does not support a relay function, for example, an eNodeB that does not support a relay function, or may also be a base station supporting a relay function, for example, a DeNB; the cell randomly accessed by the RN may be an eNodeB cell or may also be a DeNB cell. The DeNB may include: a base station module, an S-GW, and a P-GW, where the base station module, S-GW, and P-GW may be logical entities or may also be physical entities. When the base station of the cell randomly accessed by the RN is an eNodeB, the RN sends an Msg1 to the eNodeB; when the base station of the cell randomly accessed by the RN is a DeNB, the RN sends an Msg1 to the base station module in the DeNB. It should be noted that the DeNB is used as an example in the drawing.
Step 202: The RN performs an RRC connection setup process with the base station of the cell randomly accessed by the RN.

The RN sends an RRC connection request (RRC Connection Request) message to the base station. After receiving the RRC connection request message, the base station sends an RRC connection setup (RRC Connection Setup) message to the RN. After receiving the RRC connection setup message, the RN returns an RRC connection complete (RRC Connection Complete) message to the base station, where the RRC connection complete message carries attach request (Attach Request) information, where the attach request information is NAS information.
Step 203: The base station of the cell randomly accessed by the RN selects an MME serving the RN, and sends an initial UE message (Initial UE Message) to the MME, where the message carries the attach request information.

In this process, the base station may select, according to a mechanism in the 3GPP Rel-8 (R8) specification in the prior art, an MME serving the RN, where the MME may be an MME that does not support a relay function, or may also be an MME supporting a relay function.
Step 204: The MME completes an access authentication process for the RN by exchanging information with a home subscriber server (Home Subscriber Server, HSS) and the RN.
Step 205: The MME obtains subscriber information of the RN from the HSS, and determines, according to the subscriber information of the RN, that the RN rather than a UE is the currently accessing device.

The MME sends an update location request (Update Location Request) message to the HSS; the HSS sends the subscriber information of the RN to the MME through an update location answer (Update Location Answer) message; the MME may determine, according to the received subscriber information of the RN, that the RN rather than a UE is the currently accessing device.
Step 206: The MME exchanges information with a DNS server, and obtains an address of the S-GW or P-GW serving the RN.

In the example, the obtained address of the S-GW or P-GW serving the RN may be an IP address of the S-GW or P-GW serving the RN.

After the MME determines, according to the received subscriber information of the RN, that the RN is the currently accessing device, the MME sends a request message to the DNS server to request the IP address of the S-GW or P-GW, and adds indication information to the request message, where the indication information indicates that the RN is the currently accessing device. In addition, the request message may also carry the base station identifier of the base station of the cell currently accessed by the RN. After receiving the request message, if the DNS server determines that the RN is the currently accessing device and that the base station of the cell currently accessed by the RN is a DeNB, the DNS server returns the IP address of an internal S-GW or P-GW of the DeNB to the MME; if the base station of the cell currently accessed by the RN is an eNodeB, the DNS server may use the mechanism in the existing 3GPP Rel-8 technical specification to return the IP address of the selected S-GW or P-GW to the MME.

That is, if the RN selects a DeNB cell in step 201, the S-GW or P-GW serving the RN and obtained in step 206 is located in the DeNB.
Step 207: The MME executes a bearer setup process with the S-GW or P-GW.

The MME sends a create session request (Create Session Request) message to the S-GW or P-GW, and the S-GW or P-GW sends a create session response (Create Session Response) message to the MME, so as to set up a bearer between the MME and the S-GW or P-GW.
Step 208: The MME sends an initial context setup request (Initial Context Setup Request) message, where the initial context setup request message carries attach accept (Attach Accept) information and the attach accept information carries indication information indicating whether the MME supports a relay function. For example, the following two modes may be available:

### The first mode:

An EPS network feature support information element (EPS network feature support IE) in the attach accept (Attach Accept) information is modified, and an extended bit of the IE is used to indicate whether the MME supports a relay function, for example, when the extended bit is set to 0, it indicates that the MME does not support a relay function; when the extended bit is set to 1, it indicates that the MME supports a relay function.

### The second mode:

An IE is added to the attach accept (Attach Accept) information to indicate whether the MME supports a relay function. For example, when the value of the added IE is True or 1, it indicates that the MME supports a relay function; when the value of the added IE is False or 0, it indicates that the MME does not support a relay function.

Or, an IE of an enumeration type in the attach accept (Attach Accept) information is used to indicate whether the MME supports a relay function, where the IE may be an added IE, for example, ENUMERATED {support Relay function, not support Relay function}.

That is, an IE in the Attach Accept is used to indicate an enumeration type variable ENUMERATED; when the value of the variable is "not support Relay function", it indicates that the MME serving the RN does not support a relay function; when the value of the variable is "support Relay function", it indicates that the MME serving the RN supports a relay function.

Or, an IE in the attach accept (Attach Accept) information is used to indicate that the MME supports a relay function, that is, when the IE exists in the message, it indicates that the MME serving the RN supports a relay function; when the IE does not exist in the message, it implicitly indicates that the MME serving the RN does not support a relay function.

Certainly, other indication modes may be used, which does not affect the implementation of the embodiment of the present invention.
Step 209: If the base station has no radio access capability information of the RN, the base station obtains the radio access capability information of the RN.

For example, the base station sends a message for querying the radio access capability information of the RN to the RN, for example, a UE capability enquiry (UE Capability Enquiry) message; after the RN receives the message for querying the radio access capability information of the RN, the RN sends a message for feeding back the radio access capability information of the RN, for example, UE capability information (UE Capability Information), where the UE capability information carries radio access capability information of the RN.

Because the RN is used as a UE for network attach in the embodiment of the present invention, in the network attach procedure, the radio access capability information of the RN may be consistent with the radio access capability information of the UE in the existing mechanism, for example, the radio access capability information of the RN may include information such as a compression algorithm supported by the RN, whether the RN supports the function of selecting a transmit antenna, a frequency band supported by the RN, or whether the RN supports a half-duplex mode.
Step 210: The base station sends a message carrying the radio access capability information of the RN to the MME.

For example, the base station may send a UE capability information indication (UE Capability Info Indication) message to the MME, where the message carries the radio access capability information of the RN.
Step 211: The RN executes an air interface key negotiation process with the base station.

For example, the base station sends a security mode command (Security Mode Command) to the RN, and sends an encryption and integrity protection algorithm selected by the base station to the RN; the RN further derives an air interface key according to the received encryption and integrity protection algorithm, and returns a security mode complete (Security Mode Complete) message to the base station; the base station determines, according to the received security mode complete message, whether the air interface key derived by the base station is synchronized with the air interface key derived by the RN.
Step 212: The base station executes the radio resource control connection reconfiguration process, and completes setup of a signaling radio bearer (Signaling Radio Bearer, SRB) and a data radio bearer (Data Radio Bearer, DRB) with the RN.

In this step, the base station sends a radio resource control connection reconfiguration (RRC Connection Reconfiguration) message to the RN, where the message carries the attach accept information in step 208. Therefore, the RN may learn whether the MME currently serving the RN supports a relay function.
Step 213: The RN sends a radio resource control connection reconfiguration complete (RRC Connection Reconfiguration Complete) message to the base station.
Step 214: The base station sends an initial context setup response (Initial Context Setup Response) message to the MME.
Step 215: The RN exchanges information with the OAM through the selected S-GW or P-GW, obtains the configuration parameter of the RN, where the configuration parameter of the RN includes: a list of DeNB cells that are configured by the OAM and that allow being accessed by the RN.
Step 216: The RN determines, according to the list of DeNB cells that allow being accessed by the RN, which is obtained from the OAM, whether the cell currently accessed by the RN is a DeNB cell that allows being accessed, and further decides, according to the received indication information indicating whether the MME supports a relay function, whether to trigger a procedure for network detach.

For example, if the RN finds that the cell accessed by the RN is a DeNB cell that is configured by the OAM and that allows being accessed, and the MME serving the RN also supports a relay function, the RN does not trigger a procedure for network detach, and subsequently directly sets up an S1/X2 interface with the DeNB of the cell accessed by the RN; otherwise, the RN triggers a procedure for network detach, and then selects a cell from the list of DeNB cells that are configured by the OAM and that allow being accessed and re-triggers a random access procedure to the cell.

In the example, because the DNS server selects an S-GW or a P-GW for the RN according to the indication information provided by the MME and indicating that the RN is the currently accessing device and the ID of the base station accessed by the RN, if the cell currently accessed by the RN is a DeNB cell that is configured by the OAM and that allows being accessed, the DNS server returns an IP address of the internal S-GW or P-GW of the DeNB entity to the MME. Therefore, the RN only needs to decide, according to the determination about whether the cell accessed by the RN is a DeNB cell that is configured by the OAM and that allows being accessed and the received indication information indicating whether the MME supports a relay function, whether to trigger a procedure for network detach. Thereby, when network detach is not required, the network reattach procedure in the second stage in the existing network attach procedure of the RN does not need to be executed, and the existing network attach procedure of the RN is optimized.

It should be noted that in the above example, the RN learns, through attach accept information, whether the MME serving the RN supports a relay function. In another specific implementation manner, the RN may also learn, through information other than the attach accept information in the radio resource control connection reconfiguration message, whether the MME serving the RN supports a relay function. In the specific implementation manner, the network attach procedure of the RN is basically the same as that in the above embodiment, and the difference lies in that: in the specific implementation manner, it is unnecessary to modify the attach accept information in step 208, that is, the attach accept information does not carry the indication information indicating whether the MME supports a relay function, but the radio resource control connection reconfiguration (RRC Connection Reconfiguration) message in step 212 may indicate whether the MME supports a relay function, for example, the base station modifies the information other than the attach accept information in the radio resource control connection reconfiguration (RRC Connection Reconfiguration) message in step 212, and adds an IE to the information other than the attach accept information, where the IE is used to indicate whether the MME supports a relay function. The base station of the cell accessed by the RN may learn, in the following mode, whether the MME supports a relay function: When the base station sets up an S1 interface with the MME, the base station may learn, through an S1 setup response (S1 setup Response) message, whether the MME connected to the base station supports a relay function.

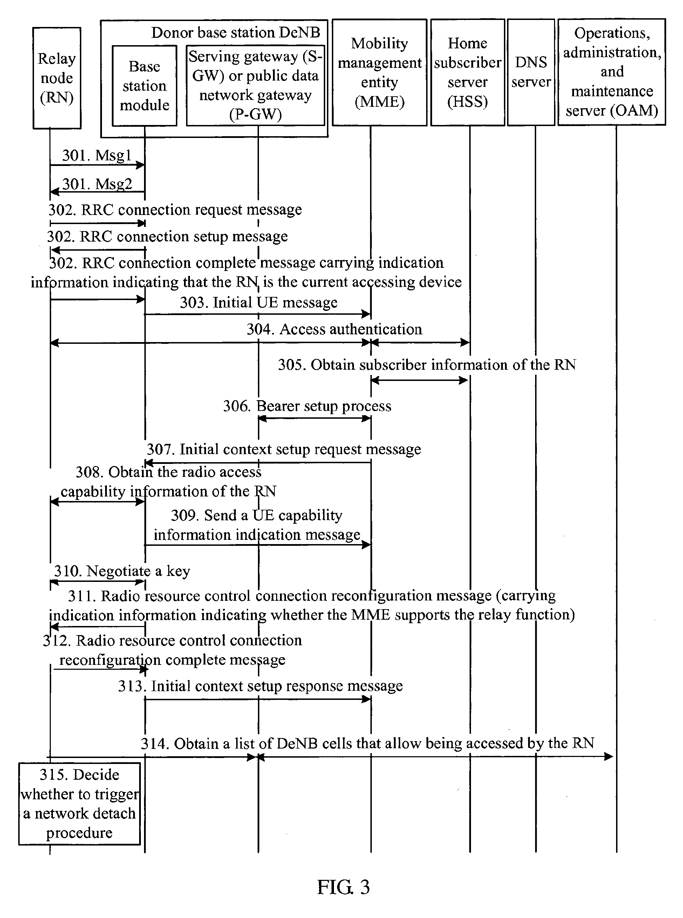

FIG. 3 illustrates a network attach method for an RN according to another example, where the method includes:
Step 301: This step may refer to step 201 in the example shown in FIG. 2, and is not further described herein.
Step 302: An RN triggers an RRC connection setup process with a base station of a cell accessed by the RN.

The RN sends an RRC connection request (RRC Connection Request) message to the base station. After receiving the RRC connection request message, the base station sends an RRC connection setup (RRC Connection Setup) message to the RN. After receiving the RRC connection setup message, the RN returns an RRC connection complete (RRC Connection Complete) message to the base station, where the RRC connection complete message carries attach request (Attach Request) information, where the attach request information is NAS information.

In this process, the RN sends indication information indicating that the RN is the currently accessing device to the base station, and the base station may learn, according to the indication information, that the RN rather than a UE is the currently accessing device. The indication information may be carried in the RRC connection request message or RRC connection complete message.
Step 303: After the base station determines, according to the indication information, that the RN is the currently accessing device, the base station selects an MME supporting a relay function for the RN, and sends an initial UE message (Initial UE Message) to the MME, where the initial UE message carries attach request information.

In this process, if the cell selected by the RN for access is a cell of a DeNB, the DeNB adds the IP address of the internal S-GW or P-GW of the DeNB entity to the initial UE message and sends the message to the selected MME.
Step 304: If the initial UE message carries the IP address of the S-GW or P-GW, the MME determines that the S-GW or P-GW corresponding to the IP address of the S-GW or P-GW that is reported by the base station is an S-GW or a P-GW serving the RN, and the MME completes an access authentication process for the RN by exchanging information with an HSS and the RN.

It should be noted that the operation of determining, by the MME, that the S-GW or P-GW corresponding to the IP address of the S-GW or P-GW that is reported by the base station is an S-GW or a P-GW serving the RN, may also be not executed in step 304, and may also be executed in step 305, which does not affect the implementation of the present invention.
Step 305: The MME obtains subscriber information of the RN from the HSS.

The MME sends an update location request (Update Location Request) message to the HSS; the HSS sends the subscriber information of the RN to the MME through an update location answer (Update Location Answer) message; the MME may determine, according to the received subscriber information of the RN, that the RN rather than a UE is the currently accessing device.

The subsequent steps may refer to steps 207-216 in the above embodiment, and are not further described herein.

In the example, the MME determines, according to the IP address of the S-GW or P-GW that is reported by the base station, the S-GW or P-GW serving the RN. Thereby, if the cell currently accessed by the RN is a cell of a DeNB, the DeNB reports the IP address of the internal S-GW or P-GW of the DeNB entity. Therefore, the S-GW or P-GW serving the RN and determined by the MME is located in the DeNB entity. In addition, because no security protection is provided in step 302, the indication information that is reported by the RN to the base station and indicates that the RN is the currently accessing device may be tampered by an attacker, resulting in that the base station may select an ordinary MME to serve the RN. Therefore, to avoid this situation, the RN may further need to learn whether the MME serving the RN supports a relay function. Specifically, the RN may learn it by using the modes of modifying non-access stratum information (for example, the attach accept Attach Accept information) or information other than the NAS information in the radio resource control connection reconfiguration (RRC Connection Reconfiguration) message mentioned in the above embodiment.

In the example, the RN determines, according to the list of DeNB cells that allow being accessed by the RN, which is obtained from the OAM, whether the cell currently accessed by the RN is a DeNB cell that allows being accessed, and further decides, according to the received indication information indicating whether the MME supports a relay function, whether to trigger a procedure for network detach, thereby optimizing the existing network attach procedure of the RN.

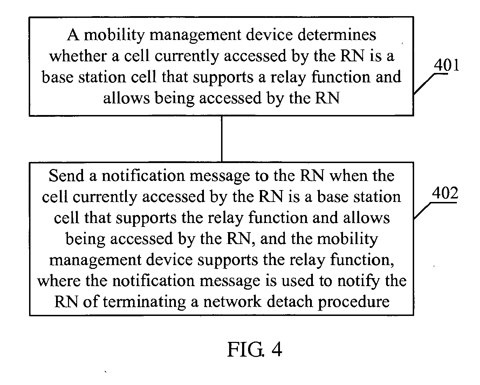

FIG. 4 illustrates a network attach method for a relay node RN according to another example, where the method is different from the methods of the above embodiments in that, in this embodiment, an MME decides whether to accept a network detach request of an RN. The method mainly includes:
Step 401: A mobility management device determines whether a cell currently accessed by an RN is a base station cell that supports a relay function and allows being accessed by the RN.

For example, a list of base station cells that support a relay function and allow being accessed by the RN may be a list of DeNB cells that are configured by an OAM and that allow being accessed by the RN.

For example, the mobility management device may determine, according to a network detach request sent by the RN, whether the cell currently accessed by the RN is a DeNB cell that allows being accessed by the RN. The mobility management device is a mobility management device currently serving the RN, and may be an MME in an LTE network or LTE-evolved network or may be an SGSN in a UMTS network, and the network detach request may be a detach request (Detach Request).

In an implementation manner, the network detach request carries indication information, where the indication information indicates whether the cell currently accessed by the RN is a DeNB cell that allows being accessed by the RN. Therefore, in this step, the mobility management device determines, according to the indication information, whether the cell currently accessed by the RN is a donor base station DeNB cell that allows being accessed by the RN. In another implementation manner, the mobility management device determines whether the network detach request carries first indication information, where the first indication information indicates that the cell currently accessed by the RN is a DeNB cell that allows being accessed by the RN; if a determination result is yes, the mobility management device determines that the cell currently accessed by the RN is a DeNB cell that allows being accessed by the RN; otherwise, the mobility management device determines that the cell currently accessed by the RN is not a DeNB cell that allows being accessed by the RN.
Step 402: Send a notification message to the RN when the cell currently accessed by the RN is a base station cell that supports a relay function and allows being accessed by the RN, and the mobility management device supports a relay function, where the notification message is used to notify the RN of terminating a procedure for network detach.

When the cell currently accessed by the RN is not a base station cell that supports a relay function and allows being accessed by the RN, or the mobility management device does not support a relay function, a notification message is sent to the RN, where the notification message is used to notify the RN of accepting network detach.

For example, the notification message used to notify the RN of terminating a procedure for network detach may include network detach request response information indicating rejection of network detach. The network detach request response information includes a cause indication, where the cause indication indicates that a cause of rejecting the network detach of the RN is that the mobility management device supports a relay function, where the network detach request response information indicating rejection of network detach may be detach reject (Detach Reject) information.

In the example, the mobility management device determines whether the cell currently accessed by the RN is a base station cell that supports a relay function and allows being accessed by the RN; when the cell currently accessed by the RN is a base station cell that supports a relay function and allows being accessed by the RN, and the mobility management device supports a relay function, the mobility management device sends a notification message to the RN, where the notification message is used to notify the RN of terminating a procedure for network detach. Thereby, the RN does not need to execute the network reattach procedure in the second stage of the network attach procedure of the RN in the prior art, thereby optimizing the existing network attach procedure of the RN, reducing network attach time of the RN, and saving network resources.

To make the technical solution provided by the foregoing example more comprehensible, the technical solution is described in detail with reference to the following example.

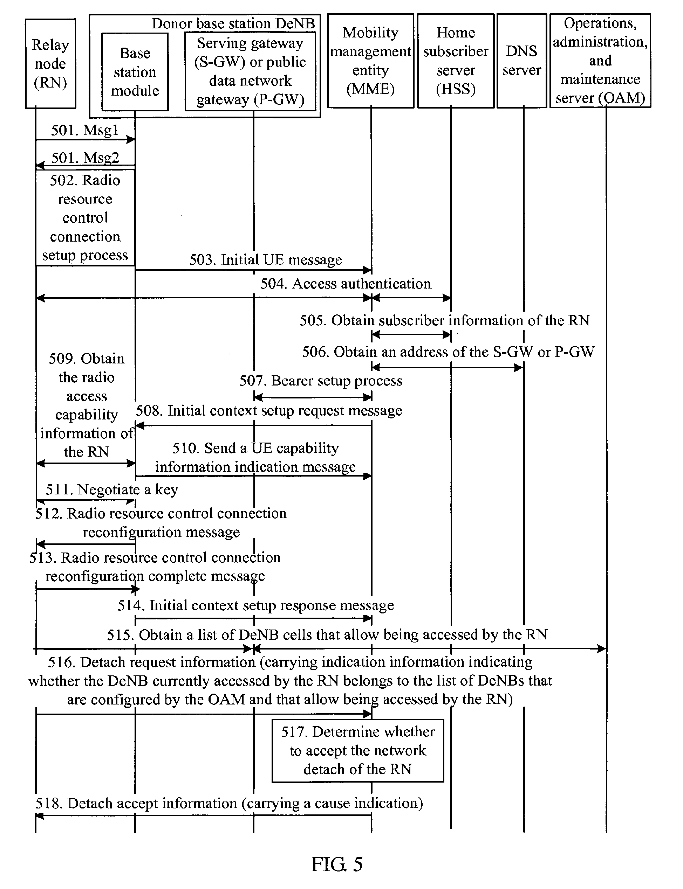

FIG. 5 illustrates a network attach method for an RN according to an example, where the method specifically includes:
Step 501 to step 515: The steps are basically the same as step 201 to step 215. The difference lies in that: It is unnecessary to modify the attach accept information in step 208, that is, the attach accept information does not need to carry indication information indicating whether the MME supports a relay function; likewise, it is unnecessary to modify the information other than the attach accept information in the radio resource control connection reconfiguration (RRC Connection Reconfiguration) message in step 212, that is, the information other than the attach accept information in the radio resource control connection reconfiguration message also does not need to carry the indication information indicating whether the MME supports a relay function.
Step 516: The RN sends detach request (Detach Request) information to the MME, requesting to execute a procedure for network detach. The detach request information carries indication information, where the indication information indicates whether the cell currently accessed by the RN is a DeNB cell that is configured by an OAM and that allows being accessed, where the detach request information is non-access stratum information.

For example, the RN may send the detach request (Detach Request) information to the DeNB through an uplink information transfer (UL Information Transfer) message, and the DeNB may further send the detach request (Detach Request) information to the MME through an uplink non-access stratum transport (UPLINK NAS Transport) message.

For example, the following two modes may be used to indicate, in the detach request information, whether the cell currently accessed by the RN is a DeNB cell that is configured by the OAM and that allows being accessed.

### The first mode:

Reserved bits, bit 1 to bit 3, in a detach type IE in the detach request (Detach Request) information are used to indicate re-attach not required (re-attach not required), or directly indicate whether the cell currently accessed by the RN is a DeNB cell that is configured by the OAM and that allows being accessed.

That is, if the RN finds that the cell currently accessed by the RN is a DeNB cell that is configured by the OAM and that allows being accessed, the value of the detach type IE in the detach request information is set to 110. Subsequently, after the MME receives the IE with the set value 110, if 110 indicates re-attach not required (re-attach not required), the MME determines, according to the IE, that the RN does not require reattach, and that the RN has correctly accessed the DeNB cell that is configured by the OAM and that allows being accessed by the RN; if 110 indicates that the cell currently accessed by the RN is a DeNB cell that is configured by the OAM and that allows being accessed, the MME determines, according to the IE, that the RN has correctly accessed the DeNB cell that is configured by the OAM and that allows being accessed by the RN.

### The second mode:

An IE is added to the detach request (Detach Request) to indicate whether the cell currently accessed by the RN is a DeNB cell that is configured by the OAM and that allows being accessed by the RN. For example, when the value of the new IE is True or 1, it indicates that the cell currently accessed by the RN is a DeNB cell that allows being accessed; when the value is False or 0, it indicates that the cell currently accessed by the RN is not a DeNB cell that allows being accessed.

Or, the new IE is only used to indicate that the cell currently accessed by the RN is a DeNB cell that allows being accessed, that is, when the IE is present in the message, it indicates that the cell currently accessed by the RN is a DeNB cell that allows being accessed; when the IE is absent in the message, it implicitly indicates that the cell currently accessed by the RN is not a DeNB cell that allows being accessed.

Certainly, other indication modes may be used, which does not affect the implementation.
Step 517: The MME determines whether to accept the network detach request of the RN.

The MME may determine, according to the indication information in the detach request (Detach Request) information, whether the cell currently accessed by the RN is a DeNB cell that is configured by the OAM and that allows being accessed by the RN, and the MME determines, according to whether the MME supports a relay function, whether to accept the network detach request of the RN.

If the MME determines that the RN has accessed the DeNB cell that is configured by the OAM and that allows being accessed by the RN, and the MME determines that the MME supports a relay function, the MME rejects the network detach request of the RN; otherwise, if the cell currently accessed by the RN is not a DeNB cell that is configured by the OAM and that allows being accessed by the RN, or the MME does not support a relay function, the MME accepts the network detach request of the RN.
Step 518: The MME sends detach accept (Detach Accept)) information to the RN when determining to accept the network detach request of the RN.

Once the RN receives the detach accept information, the RN learns that the MME serving the RN does not support a relay function. After a procedure for network detach of the RN is executed, the RN selects a cell from the list of DeNB cells that are configured by the OAM and that allow being accessed, and re-triggers a random access process to the selected cell.

When the MME determines to reject the network detach request of the RN, the MME sends detach reject (Detach Reject) information carrying a cause indication to the RN, where the cause indication indicates that a cause of rejecting the network detach of the RN is that the MME serving the RN supports a relay function. After the RN receives the detach reject information sent by the MME, and finds that the cause of rejecting network detach is that the selected MME already supports a relay function, the RN gives up execution of a procedure for network detach, and subsequently directly sets up an S1/X2 interface with the DeNB of the cell accessed by the RN.

The MME may send the detach accept (Detach Accept) information or detach reject (Detach Reject) information to the DeNB through a downlink non-access stratum transport (DOWNLINK NAS Transport) message; the DeNB may further send the detach accept (Detach Accept) or detach reject (Detach Reject) information to the RN through a downlink information transfer (DL Information Transfer) message.

In the embodiment of the present invention, the MME determines, according to the indication information in the detach request (Detach Request) information, whether the cell currently accessed by the RN is a DeNB cell that is configured by the OAM and that allows being accessed by the RN, and the MME determines, according to whether the MME supports a relay function, whether to accept the network detach request of the RN, thereby optimizing the existing network attach procedure of the RN. Thereby, when network detach is not required, it is unnecessary to execute the network reattach procedure in the second stage in the existing network attach procedure of the RN, thereby optimizing the existing network attach procedure of the RN.

It should be noted that the sequence of steps executed in the examples is not strictly limited; a person skilled in the art may adjust the sequence of steps so long as the objective of the present invention can be achieved, without affecting the implementation of the present invention.

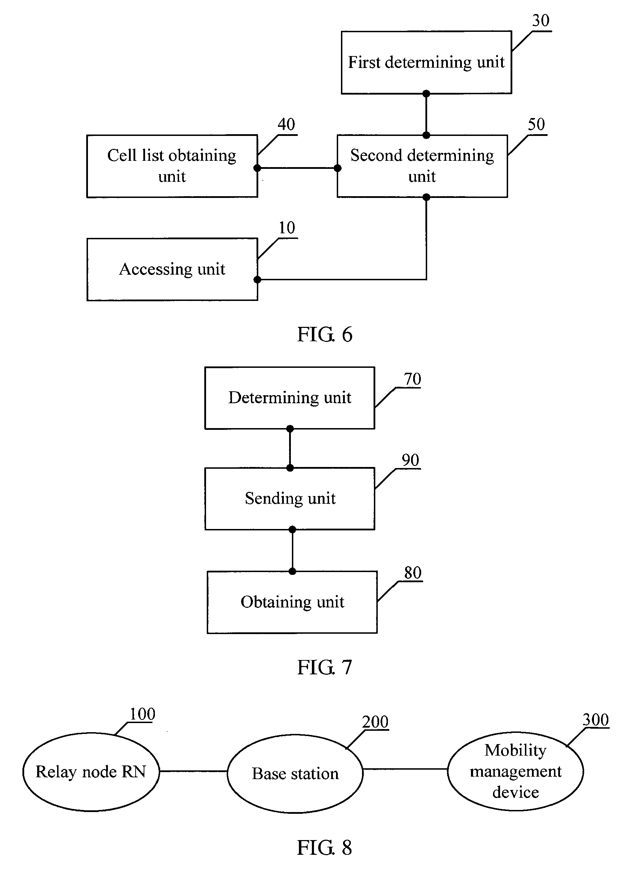

As shown in FIG. 6, an example provides a relay node. The relay node includes:
an accessing unit 10, configured to access a cell;
a first determining unit 30, configured to determine whether a mobility management device serving the RN supports a relay function, where the mobility management device serving the RN is selected by a base station of the cell for the RN;
a cell list obtaining unit 40, configured to obtain a list of base station cells that support a relay function and allow being accessed by the RN; and
a second determining unit 50, configured to: when the cell accessed by the RN belongs to the list of base station cells that support a relay function, and the mobility management device supports a relay function, determine not to leave the accessed cell, or otherwise, determine to leave the accessed cell and access a cell in the list of base station cells that support a relay function.

The first determining unit 30 may be configured to determine, according to indication information carried in a radio resource configuration message sent by the base station of the cell, that the mobility management device serving the RN supports a relay function, where the indication information is used to indicate that the mobility management device serving the RN supports a relay function. The radio resource configuration message may be a radio resource control connection reconfiguration message. In a preferred mode, the first determining unit may be configured to determine, according to the indication information in non-access stratum NAS information carried in the radio resource control connection reconfiguration message, that the mobility management device serving the RN supports a relay function, where the indication information is added by the mobility management device to the NAS information and sent to the base station of the cell; in another preferred mode, the first determining unit may be configured to determine, according to the indication information in the information other than the NAS information carried in the radio resource control connection reconfiguration message, that the mobility management device serving the RN supports a relay function, where the indication information is added by the base station of the cell to the radio resource control connection reconfiguration message. The specific implementation manner is not described herein. For details, reference may be made to the corresponding description in the method embodiments.

The cell list obtaining unit 40 may be configured to obtain, through a gateway, a list of DeNB cells that allow being accessed by the RN, where when the cell accessed by the RN belongs to the list of base station cells that support a relay function, the gateway is an internal gateway of the base station of the cell accessed by the RN.

To increase the probability that the mobility management device selected by the base station of the cell is a mobility management device supporting a relay function, the accessing unit 10 is further configured to send, in the process of accessing the cell, indication information indicating that the RN is the currently accessing device to the base station of the cell, so that the base station of the cell selects the mobility management device supporting a relay function to serve the RN.

In the example, when the cell accessed by the RN is a base station cell that supports a relay function and allows being accessed by the RN, and the mobility management device serving the RN supports a relay function, the RN determines not to leave the accessed cell. Thereby, it is unnecessary to execute the network reattach procedure in the second stage of the network attach procedure of the RN in the prior art, thereby optimizing the existing network attach procedure of the RN, reducing network attach time of the RN, and saving network resources.

As shown in FIG. 7, an example provides a mobility management device, where the mobility management device may be an MME in an LTE network or an LTE-evolved network, for example, an LTE Advanced (advanced) network, or may also be an SGSN in a UMTS network. The mobility management device includes:
a determining unit 70, configured to determine whether a cell currently accessed by an RN is a base station cell that supports a relay function and allows being accessed by the RN; and
a sending unit 90, configured to send a notification message to the RN when the cell currently accessed by the RN is a base station cell that supports a relay function and allows being accessed by the RN, and the mobility management device supports a relay function, where the notification message is used to notify the RN of terminating a procedure for network detach.

In a preferred implementation manner, the determining unit 70 may be configured to determine, according to indication information carried in a network detach request sent by the RN, that the cell currently accessed by the RN is a base station cell that supports a relay function and allows being accessed by the RN, where the indication information is used to indicate that the cell currently accessed by the RN is a base station cell that supports a relay function and allows being accessed by the RN. The specific mode of carrying indication information in the network detach request is not further described herein. For details, reference may be made to the corresponding description in the method examples.

The notification message that is sent by the sending unit 90 and is used to notify the RN of terminating a procedure for network detach includes a cause indication, where the cause indication indicates that a cause of rejecting the network detach of the RN is that the mobility management device supports a relay function. The specific mode of carrying the cause indication is not further described herein. For details, reference may be made to the corresponding description of the method. When the mobility management device determines to accept the network detach request of the RN, the sending unit 90 is further configured to send a notification message to the RN, where the notification message is used to notify that the network detach of the RN is accepted.

To ensure that when the cell accessed by the RN is a base station cell supporting a relay function, the gateway serving the RN is an internal gateway of the base station of the cell accessed by the RN, the sending unit 90 is further configured to send a base station identifier of the base station of the cell accessed by the RN and the indication information indicating that the RN is the currently accessing device to a DNS server; the mobility management device further includes an obtaining unit 80, where the obtaining unit 80 may be configured to obtain an identifier of the gateway that is selected by the DNS server and serves the RN, where when the cell accessed by the RN is a base station cell supporting a relay function, the gateway selected by the DNS server is an internal gateway of the base station of the cell accessed by the RN. Thereby, the mobility management device only sets up a bearer with the gateway subsequently, where the gateway serves the RN.

In the example, the mobility management device determines whether the cell currently accessed by the RN is a base station cell that supports a relay function and allows being accessed by the RN; when the cell currently accessed by the RN is a base station cell that supports a relay function and allows being accessed by the RN, and the mobility management device supports a relay function, the mobility management device sends a notification message to the RN, where the notification message is used to notify the RN of terminating a procedure for network detach. Thereby, the RN does not need to execute the network reattach procedure in the second stage of the network attach procedure of the RN in the prior art, thereby optimizing the existing network attach procedure of the RN, reducing network attach time of the RN, and saving network resources.

As shown in FIG. 8, an example provides a network system. The network system includes:
a relay node RN 100, configured to access a cell, where the cell is a cell in an evolved base station eNodeB or a base station cell supporting a relay function; receive a radio resource configuration message sent by a base station of the cell; determine, according to the radio resource configuration message, whether a mobility management device selected by the base station of the cell for the RN supports a relay function; obtain a list of base station cells that support a relay function and allow being accessed by the RN; and when the cell accessed by the RN belongs to the list of base station cells that support a relay function, and the mobility management device supports a relay function, determine not to leave the accessed cell, or otherwise, determine to leave the accessed cell and access a cell in the list of base station cells that support a relay function; and
the base station 200 of the cell, configured to send the radio resource configuration message to the relay node, and select a mobility management device for the RN.

When the RN accesses a base station cell supporting a relay function, to ensure that the gateway accessed by the UE is an internal gateway of the base station that supports a relay function, the network system further includes a mobility management device 300, configured to: when the relay node accesses the base station cell supporting a relay function, send the identifier of the base station that supports a relay function and is accessed by the RN and indication information indicating that the RN is the currently accessing device to a DNS server; and obtain the identifier of the gateway that is selected by the DNS server and serves the RN, where the gateway is selected by the DNS server and is an internal gateway of the base station that supports a relay function and is accessed by the RN.

To learn that the RN is a relay device, the mobility management device is further configured to obtain subscriber information of the RN from a home subscriber server, and determine, according to the subscriber information of the RN, that the RN is a relay device. Thereby, the mobility management device can send the indication information indicating that the RN is the currently accessing device to the DNS server.

In order to notify the base station that the RN is a relay device, so as to increase the probability that the mobility management device selected by the base station is a mobility management device supporting a relay function, the RN 100 is further configured to send, in the process of accessing the cell, indication information indicating that the RN is the currently accessing device to the base station of the cell; in this case, the base station 200 of the cell is specifically configured to select, according to the indication information indicating that the RN is the currently accessing device, the mobility management device supporting a relay function for the RN.

The information exchange between the relay node RN, the mobility management device, and the base station of the cell (for example, a DeNB or eNodeB) is not further described herein. For details, reference may be made to the detailed description of the method embodiments.

In the example, the RN determines, according to the radio resource configuration message, whether the mobility management device selected by the base station of the cell accessed by the RN for the RN supports a relay function; when the cell accessed by the RN is a DeNB cell that allows being accessed by the RN, and the mobility management device selected by the base station of the cell for the RN supports a relay function, the RN determines not to leave the accessed cell. Therefore, the RN does not need to execute the network reattach procedure in the second stage of the network attach procedure in the prior art, thereby optimizing the existing network attach procedure of the RN, reducing network attach time of the RN, and saving network resources.

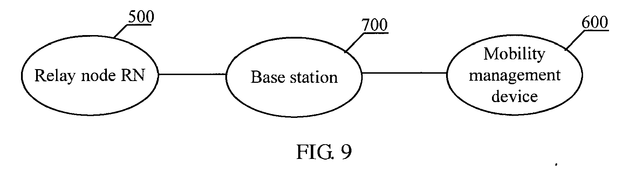

As shown in FIG. 9, an example provides another network system, including: a relay node RN 500, and a mobility management device 600.

The mobility management device 600 is configured to receive a network detach request sent by a relay node RN; determine, according to the network detach request, whether a cell currently accessed by the RN is a base station cell that supports a relay function and allows being accessed by the RN; and send a notification message to the RN when the cell currently accessed by the RN is a base station cell that supports a relay function and allows being accessed by the RN, and the mobility management device supports a relay function, where the notification message is used to notify the RN of terminating a procedure for network detach; otherwise, send a notification message to the RN, where the notification message is used to notify that the network detach of the RN is accepted.

The relay node RN 500 is configured to send the network detach request to the mobility management device, receive the notification message sent by the mobility management device, and determine, according to the received notification message, whether to terminate network detach.

When the RN accesses a base station cell supporting a relay function, to ensure that the gateway accessed by the UE is an internal gateway of the base station that supports a relay function, the mobility management device 600 is further configured to: when the relay node accesses the base station cell supporting a relay function, send the identifier of the base station that supports a relay function and is accessed by the RN and the indication information indicating that the RN is the currently accessing device to a DNS server; and obtain the identifier of the gateway that is selected by the DNS server and serves the RN, where the gateway is selected by the DNS server and is an internal gateway of the base station that supports a relay function and is accessed by the RN.

In order to notify the base station that the RN is a relay device, so as to increase the probability that the mobility management device selected by the base station is a mobility management device supporting a relay function, the RN 500 is further configured to send, in the process of accessing the cell, indication information indicating that the RN is the currently accessing device to the base station of the cell; in this case, the network system further includes the base station 700 of the cell, which is specifically configured to select, according to the indication information indicating that the RN is the currently accessing device, the mobility management device supporting a relay function for the RN.

The information exchange and processing between the network elements (the relay node RN, donor base station DeNB, mobility management device, and so on) in the network system are not further described herein. For details, reference may be made to the corresponding description in the method examples.

In the example, after the mobility management device receives the network detach request sent by the RN, the mobility management device determines, according to the network detach request, whether the cell currently accessed by the RN is a base station cell that supports a relay function and allows being accessed by the RN; then determines, according to whether the cell currently accessed by the RN is a base station cell that supports a relay function and allows being accessed by the RN and whether the mobility management device supports a relay function, whether to accept the network detach request; and notify the RN, so that the RN can determine whether to leave the cell currently accessed by the RN and then access a base station cell supporting a relay function. Thereby, when the mobility management device notifies the RN that network detach is rejected, the RN does not need to execute the network reattach procedure in the second stage of the network attach procedure of the RN in the prior art, thereby optimizing the existing network attach procedure of the RN, reducing network attach time of the RN, and saving network resources.

A person of ordinary skill in the art may understand that all or part of steps in the methods of the above examples may be implemented by relevant hardware instructed by a program. The program may be stored in a computer readable storage medium, such as a read only memory, a magnetic disk, or an optical disk.

The invention and its embodiments are not limited to the examples described above but may vary within the scope of the appended claims.

## Claims

1. A network attach method for a relay node, RN, comprising:
accessing (101), by the RN, a cell;
obtaining (103), by the RN, a list of base station cells that support a relay function and allow being accessed by the RN; and **characterized by**:
determining (102), by the RN according to indication information carried in a radio resource configuration message sent by a base station of the cell, that a mobility management device serving the RN supports a relay function, wherein the indication information is used to indicate that the mobility management device serving the RN supports a relay function; and
when the cell accessed by the RN belongs to the list of base station cells that support a relay function, and the mobility management device serving the RN supports a relay function, determining (104), by the RN, not to leave the accessed cell.

2. The method according to claim 1, wherein:
the indication information is located in non-access stratum, NAS, information in the radio resource configuration message; or
the indication information is located in information other than NAS information in the radio resource configuration message.

3. The method according to any one of claims 1 to 2, wherein the method further comprises:
in a process of accessing the cell, sending (302), by the RN, indication information to the base station of the cell, wherein the indication information indicates that the RN is a currently accessing device, so that the base station of the cell selects the mobility management device supporting a relay function to serve the RN.

4. The method according to any one of claims 1 to 2, wherein the obtaining a list of base station cells that support a relay function and allow being accessed by the RN comprises:
obtaining (215, 314), by the RN through a gateway, the list of base station cells that support a relay function and allow being accessed by the RN; wherein
when the cell accessed by the RN belongs to the list of base station cells that support a relay function, the gateway is an internal gateway of the base station of the cell accessed by the RN.

5. A network attach method for a relay node, RN, **characterized by**:
determining (401), by a mobility management device, whether a cell currently accessed by the RN is a base station cell that supports a relay function and allows being accessed by the RN; and
sending (402) a notification message to the RN when the cell currently accessed by the RN is a base station cell that supports a relay function and allows being accessed by the RN, and the mobility management device supports a relay function, wherein the notification message is used to notify the RN of terminating a procedure for network detach.

6. The method according to claim 5, wherein:
the determining, by a mobility management device, whether a cell currently accessed by the RN is a base station cell that supports a relay function and allows being accessed by the RN comprises:
determining (516), by the mobility management device according to indication information carried in a network detach request sent by the RN, that the cell currently accessed by the RN is a base station cell that supports a relay function and allows being accessed by the RN, wherein the indication information is used to indicate that the cell currently accessed by the RN is a base station cell that supports a relay function and allows being accessed by the RN.

7. The method according to claim 6, wherein:
the notification message used to notify the RN of terminating a procedure for network detach comprises (518) a cause indication, wherein the cause indication indicates that a cause of rejecting a network detach of the RN is that the mobility management device supports a relay function.

8. A relay node, RN, comprising:
an accessing unit (10), configured to access a cell;
a cell list obtaining unit (40), configured to obtain a list of base station cells that support a relay function and allow being accessed by the RN; and **characterized by**:
a first determining unit (30), configured to determine, according to indication information carried in a radio resource configuration message sent by a base station of the cell, that a mobility management device serving the RN supports a relay function, wherein the indication information is used to indicate that the mobility management device serving the RN supports a relay function; and
a second determining unit (50), configured to: when the cell accessed by the RN belongs to the list of base station cells that support a relay function, and the mobility management device serving the RN supports a relay function, determine not to leave the accessed cell.

9. The relay node according to claim 8, wherein:
the accessing unit (10) is configured to send indication information to the base station of the cell in a process of accessing the cell, wherein the indication information indicates that the RN is a currently accessing device, so that the base station of the cell selects the mobility management device supporting a relay function to serve the RN.

10. The relay node according to claim 8, wherein:
the cell list obtaining unit (40) is configured to obtain, through a gateway, the list of base station cells that support a relay function and allow being accessed by the RN, wherein when the cell accessed by the RN belongs to the list of base station cells that support a relay function, the gateway is an internal gateway of the base station of the cell accessed by the RN.

11. A mobility management device, **characterized by**:
a determining unit (70), configured to determine whether a cell currently accessed by a relay node, RN, is a base station cell that supports a relay function and allows being accessed by the RN; and
a sending unit (90), configured to send a notification message to the RN when the cell currently accessed by the RN is a base station cell that supports a relay function and allows being accessed by the RN, and the mobility management device supports a relay function, wherein the notification message is used to notify the RN of terminating a procedure for network detach.

12. The mobility management device according to claim 11, wherein:
the determining unit (70) is configured to determine, according to indication information carried in a network detach request sent by the RN, that the cell currently accessed by the RN is a base station cell that supports a relay function and allows being accessed by the RN, wherein the indication information is used to indicate that the cell currently accessed by the RN is a base station cell that supports a relay function and allows being accessed by the RN.

13. The mobility management device according to claim 11, wherein:
the notification message used to notify the RN of terminating a procedure for network detach comprises a cause indication, wherein the cause indication indicates that a cause of rejecting the network detach of the RN is that the mobility management device supports a relay function.

## Patentansprüche

1. Netzverbindungsverfahren für einen Relaisknoten, RN, das Folgendes umfasst:
Zugreifen (101) auf eine Zelle durch den RN;
Abrufen (103) einer Liste von Basisstationszellen, die eine Relaisfunktion unterstützen und zulassen, dass durch den RN auf sie zugegriffen wird, durch den RN; und **gekennzeichnet durch**:
Bestimmen (102) **durch** den RN gemäß Angabeinformationen, die in einer **durch** eine Basisstation der Zelle gesendeten Funkressourcenkonfigurationsmeldung geführt werden, dass eine den RN bedienende Mobilitätsverwaltungseinrichtung eine Relaisfunktion unterstützt, wobei die Angabeinformationen verwendet werden, um anzugeben, dass die den RN bedienende Mobilitätsverwaltungseinrichtung eine Relaisfunktion unterstützt; und,
wenn die Zelle, auf die **durch** den RN zugegriffen wird, zur Liste von Basisstationszellen, die eine Relaisfunktion unterstützen, gehört und die den RN bedienende Mobilitätsverwaltungseinrichtung eine Relaisfunktion unterstützt, Bestimmen (104) **durch** den RN, dass die Zelle, auf die zugegriffen wird, nicht verlassen werden soll.

2. Verfahren nach Anspruch 1, wobei:
die Angabeinformationen sich in "Non-Access-Stratum(NAS)-Informationen" in der Funkressourcenkonfigurationsmeldung befinden; oder
die Angabeinformationen sich in anderen Informationen als NAS-Informationen in der Funkressourcenkonfigurationsmeldung befinden.

3. Verfahren nach einem der Ansprüche 1 bis 2, wobei das Verfahren weiter Folgendes umfasst:
bei einem Prozess des Zugreifens auf die Zelle Senden (302) von Angabeinformationen an die Basisstation der Zelle durch den RN, wobei die Angabeinformationen angeben, dass der RN eine momentan zugreifende Einrichtung ist, sodass die Basisstation der Zelle die Mobilitätsverwaltungseinrichtung auswählt, die eine Relaisfunktion unterstützt, um den RN zu bedienen.

4. Verfahren nach einem der Ansprüche 1 bis 2, wobei das Abrufen einer Liste von Basisstationszellen, die eine Relaisfunktion unterstützen und zulassen, dass durch den RN auf sie zugegriffen wird, Folgendes umfasst:
Abrufen (215, 314) der Liste von Basisstationszellen, die eine Relaisfunktion unterstützen und zulassen, dass durch den RN auf sie zugegriffen wird, durch den RN über ein Gateway; wobei,
wenn die Zelle, auf die durch den RN zugegriffen wird, zur Liste von Basisstationszellen, die eine Relaisfunktion unterstützen, gehört, das Gateway ein internes Gateway der Basisstation der Zelle ist, auf die durch den RN zugegriffen wird.

5. Netzverbindungsverfahren für einen Relaisknoten, RN, **gekennzeichnet durch**:
Bestimmen (401) **durch** eine Mobilitätsverwaltungseinrichtung, ob eine Zelle, auf die momentan **durch** den RN zugegriffen wird, eine Basisstationszelle ist, die eine Relaisfunktion unterstützt und zulässt, dass **durch** den RN auf sie zugegriffen wird; und
Senden (402) einer Benachrichtigungsmeldung an den RN, wenn die Zelle, auf die momentan **durch** den RN zugegriffen wird, eine Basisstationszelle ist, die eine Relaisfunktion unterstützt und zulässt, dass **durch** den RN auf sie zugegriffen wird, und die Mobilitätsverwaltungseinrichtung eine Relaisfunktion unterstützt, wobei die Benachrichtigungsmeldung verwendet wird, um dem RN die Beendigung einer Prozedur für eine Netzverbindungsaufhebung zu melden.

6. Verfahren nach Anspruch 5, wobei:
das Bestimmen durch eine Mobilitätsverwaltungseinrichtung, ob eine Zelle, auf die momentan durch den RN zugegriffen wird, eine Basisstationszelle ist, die eine Relaisfunktion unterstützt und zulässt, dass durch den RN auf sie zugegriffen wird, Folgendes umfasst:
Bestimmen (516) durch die Mobilitätsverwaltungseinrichtung gemäß Angabeinformationen, die in einer durch den RN gesendeten Netzverbindungsaufhebungsanforderung geführt werden, dass die Zelle, auf die momentan durch den RN zugegriffen wird, eine Basisstationszelle ist, die eine Relaisfunktion unterstützt und zulässt, dass durch den RN auf sie zugegriffen wird, wobei die Angabeinformationen verwendet werden, um anzugeben, dass die Zelle, auf die momentan durch den RN zugegriffen wird, eine Basisstationszelle ist, die eine Relaisfunktion unterstützt und zulässt, dass durch den RN auf sie zugegriffen wird.

7. Verfahren nach Anspruch 6, wobei:
die Benachrichtigungsmeldung, die verwendet wird, um dem RN die Beendigung einer Prozedur für eine Netzverbindungsaufhebung mitzuteilen, eine Ursachenangabe umfasst (518), wobei die Ursachenangabe angibt, dass eine Ursache für die Ablehnung einer Netzverbindungsaufhebung des RN ist, dass die Mobilitätsverwaltungseinrichtung eine Relaisfunktion unterstützt.

8. Relaisknoten, RN, der Folgendes umfasst:
eine Zugriffseinheit (10), die konfiguriert ist, um auf eine Zelle zuzugreifen;
eine Zellenlistenabrufeinheit (40), die konfiguriert ist, um eine Liste von Basisstationszellen abzurufen, die eine Relaisfunktion unterstützen und zulassen, dass durch den RN auf sie zugegriffen wird; und **gekennzeichnet durch**:
eine erste Bestimmungseinheit (30), die konfiguriert ist, um gemäß Angabeinformationen, die in einer **durch** eine Basisstation der Zelle gesendeten Funkressourcenkonfigurationsmeldung geführt werden, zu bestimmen, dass eine den RN bedienende Mobilitätsverwaltungseinrichtung eine Relaisfunktion unterstützt, wobei die Angabeinformationen verwendet werden, um anzugeben, dass die den RN bedienende Mobilitätsverwaltungseinrichtung eine Relaisfunktion unterstützt; und
eine zweite Bestimmungseinheit (50), die konfiguriert ist, um: wenn die Zelle, auf die **durch** den RN zugegriffen wird, zur Liste von Basisstationszellen, die eine Relaisfunktion unterstützen, gehört und die den RN bedienende Mobilitätsverwaltungseinrichtung eine Relaisfunktion unterstützt, zu bestimmen, dass die Zelle, auf die zugegriffen wird, nicht verlassen werden soll.

9. Relaisknoten nach Anspruch 8, wobei:
die Zugriffseinheit (10) konfiguriert ist, um bei einem Prozess des Zugreifens auf die Zelle Angabeinformationen an die Basisstation der Zelle zu senden, wobei die Angabeinformationen angeben, dass der RN eine momentan zugreifende Einrichtung ist, sodass die Basisstation der Zelle die Mobilitätsverwaltungseinrichtung auswählt, die eine Relaisfunktion unterstützt, um den RN zu bedienen.

10. Relaisknoten nach Anspruch 8, wobei:
die Zellenlistenabrufeinheit (40) konfiguriert ist, um über ein Gateway die Liste von Basisstationszellen abzurufen, die eine Relaisfunktion unterstützen und zulassen, dass durch den RN auf sie zugegriffen wird, wobei, wenn die Zelle, auf die durch den RN zugegriffen wird, zur Liste von Basisstationszellen, die eine Relaisfunktion unterstützen, gehört, das Gateway ein internes Gateway der Basisstation der Zelle ist, auf die durch den RN zugegriffen wird.

11. Mobilitätsverwaltungseinrichtung, **gekennzeichnet durch**:
eine Bestimmungseinheit (70), die konfiguriert ist, um zu bestimmen, ob eine Zelle, auf die momentan **durch** einen Relaisknoten, RN, zugegriffen wird, eine Basisstationszelle ist, die eine Relaisfunktion unterstützt und zulässt, dass **durch** den RN auf sie zugegriffen wird; und
eine Sendeeinheit (90), die konfiguriert ist, um eine Benachrichtigungsmeldung an den RN zu senden, wenn die Zelle, auf die momentan **durch** den RN zugegriffen wird, eine Basisstationszelle ist, die eine Relaisfunktion unterstützt und zulässt, dass durch den RN auf sie zugegriffen wird, und die Mobilitätsverwaltungseinrichtung eine Relaisfunktion unterstützt, wobei die Benachrichtigungsmeldung verwendet wird, um dem RN die Beendigung einer Prozedur für eine Netzverbindungsaufhebung zu melden.

12. Mobilitätsverwaltungseinrichtung nach Anspruch 11, wobei:
die Bestimmungseinheit (70) konfiguriert ist, um gemäß Angabeinformationen, die in einer durch den RN gesendeten Netzverbindungsaufhebungsanforderung geführt werden, zu bestimmen, dass die Zelle, auf die momentan durch den RN zugegriffen wird, eine Basisstationszelle ist, die eine Relaisfunktion unterstützt und zulässt, dass durch den RN auf sie zugegriffen wird, wobei die Angabeinformationen verwendet werden, um anzugeben, dass die Zelle, auf die momentan durch den RN zugegriffen wird, eine Basisstationszelle ist, die eine Relaisfunktion unterstützt und zulässt, dass durch den RN auf sie zugegriffen wird.

13. Mobilitätsverwaltungseinrichtung nach Anspruch 11, wobei:
die Benachrichtigungsmeldung, die verwendet wird, um dem RN die Beendigung einer Prozedur für eine Netzverbindungsaufhebung mitzuteilen, eine Ursachenangabe umfasst, wobei die Ursachenangabe angibt, dass eine Ursache für die Ablehnung der Netzverbindungsaufhebung des RN ist, dass die Mobilitätsverwaltungseinrichtung eine Relaisfunktion unterstützt.

## Revendications

1. Procédé de rattachement à un réseau destiné à un noeud de relayage, RN, comprenant :
l'accès (101) à une cellule par le noeud de relayage RN,
la récupération (103) par le noeud de relayage RN d'une liste de cellules de stations de base qui prennent en charge une fonction de relayage et permettent un accès par le noeud de relayage RN, et **caractérisé par**
la détermination (102) par le noeud de relayage RN, en fonction d'informations d'indications transportées dans un message de configuration de ressources radio envoyé par une station de base de la cellule, qu'un dispositif de gestion de mobilité desservant le noeud de relayage RN prend en charge une fonction de relayage, les informations d'indications étant utilisées pour indiquer que le dispositif de gestion de mobilité desservant le noeud de relayage RN prend en charge une fonction de relayage, et
la détermination (104) par le noeud de relayage RN, de ne pas laisser la cellule en accès lorsque la cellule à laquelle le noeud de relayage RN fait accès appartient à la liste de cellules de stations de base qui prennent en charge une fonction de relayage, et lorsque le dispositif de gestion de mobilité desservant le noeud de relayage RN prend en charge une fonction de relayage.

2. Procédé selon la revendication 1, dans lequel :
les informations d'indications sont situées dans des informations de strate de non accès, NAS, dans le message de configuration de ressources radio, ou
les informations d'indications sont situées dans des informations différentes des informations de strate de non accès, NAS, dans le message de configuration de ressources radio.

3. Procédé selon l'une quelconque des revendications 1 à 2, le procédé comprenant en outre :
l'envoi (302) par le noeud de relayage RN, dans un procédé d'accès à la cellule, d'informations d'indications à la station de base de la cellule, les informations d'indications indiquant que le noeud de relayage RN est un dispositif en cours d'accès de telle sorte que la station de base de la cellule sélectionne le dispositif de gestion de mobilité prenant en charge une fonction de relayage afin de desservir le noeud de relayage RN.

4. Procédé selon l'une quelconque des revendications 1 à 2, dans lequel la récupération d'une liste de cellules de stations de base, qui prennent en charge une fonction de relayage et permettent un accès par le noeud de relayage RN, comprend :
la récupération (215, 314) par le noeud de relayage RN grâce à une passerelle, de la liste de cellules de stations de base qui prennent en charge une fonction de relayage et permettent un accès par le noeud de relayage RN, où
lorsque la cellule à laquelle le noeud de relayage RN fait accès appartient à la liste de cellules de stations de base qui prennent en charge une fonction de relayage, la passerelle est une passerelle interne de la station de base de la cellule à laquelle le noeud de relayage RN fait accès.

5. Procédé de rattachement à un réseau pour un noeud de relayage, RN, **caractérisé par** :
la détermination (401) par un dispositif de gestion de mobilité, de ce qu'une cellule en cours d'accès par le noeud de relayage RN est une cellule de stations de base qui prend en charge une fonction de relayage et permet un accès par le noeud de relayage RN, et
l'envoi (402) d'un message de notification au noeud de relayage RN, lorsque la cellule en cours d'accès par le noeud de relayage RN est une cellule de stations de base qui prend en charge une fonction de relayage et permet un accès par le noeud de relayage RN, et lorsque le dispositif de gestion de mobilité prend en charge une fonction de relayage, le message de notification étant utilisé pour indiquer au noeud de relayage RN la fin d'une procédure de détachement du réseau.

6. Procédé selon la revendication 5, dans lequel :
la détermination par un dispositif de gestion de mobilité, de ce qu'une cellule en cours d'accès par le noeud de relayage RN est une cellule de stations de base qui prend en charge une fonction de relayage et permet un accès par le noeud de relayage RN, comprend :
la détermination (516), par le dispositif de gestion de mobilité en fonction d'informations d'indications transportées dans une demande de détachement du réseau envoyée par le noeud de relayage RN, que la cellule en cours d'accès par le noeud de relayage RN est une cellule de stations de base qui prend en charge une fonction de relayage et permet un accès par le noeud de relayage RN, les informations d'indications étant utilisées pour indiquer que la cellule en cours d'accès par le noeud de relayage RN est une cellule de stations de base qui prend en charge une fonction de relayage et permet un accès par le noeud de relayage RN.

7. Procédé selon la revendication 6, dans lequel :
le message de notification utilisé pour indiquer au noeud de relayage RN la fin d'une procédure de détachement du réseau comprend (518) une indication de cause, celle-ci indiquant qu'une cause de rejet d'un détachement d'un réseau du noeud de relayage RN réside en ce que le dispositif de gestion de mobilité prend en charge une fonction de relayage.

8. Noeud de relayage, RN, comprenant :
une unité d'accès (10) configurée pour accéder à une cellule,
une unité de récupération de liste de cellules (40) configurée pour obtenir une liste de cellules de stations de base qui prennent en charge une fonction de relayage et permettent un accès par le noeud de relayage RN, et **caractérisé par** :
une première unité de détermination (30) configurée pour déterminer, en fonction d'informations d'indications transportées dans un message de configuration de ressources radio envoyé par une station de base de la cellule, qu'un dispositif de gestion de mobilité desservant le noeud de relayage RN prend en charge une fonction de relayage, les informations d'indications étant utilisées pour indiquer que le dispositif de gestion de mobilité desservant le noeud de relayage RN prend en charge une fonction de relayage, et
une seconde unité de détermination (50), configurée pour déterminer de ne pas laisser la cellule en accès lorsque la cellule à laquelle le noeud de relayage RN fait accès appartient à la liste de cellules de stations de base qui prennent en charge une fonction de relayage, et lorsque le dispositif de gestion de mobilité desservant le noeud de relayage RN prend en charge une fonction de relayage.

9. Noeud de relayage selon la revendication 8, dans lequel :
l'unité d'accès (10) est configurée pour envoyer des informations d'indications à la station de base de la cellule dans un procédé d'accès à la cellule, les informations d'indications indiquant que le noeud de relayage RN est un dispositif en cours d'accès de telle sorte que la station de base de la cellule sélectionne le dispositif de gestion de mobilité prenant en charge une fonction de relayage afin de desservir le noeud de relayage RN.

10. Noeud de relayage selon la revendication 8, dans lequel :
l'unité de récupération de liste de cellules (40) est configurée pour récupérer, par l'intermédiaire d'une passerelle, la liste de cellules de stations de base qui prennent en charge une fonction de relayage et permettent un accès par le noeud de relayage RN, où, lorsque la cellule à laquelle le noeud de relayage RN fait accès appartient à la liste de cellules de stations de base qui prennent en charge une fonction de relayage, la passerelle est une passerelle interne de la station de base de la cellule à laquelle le noeud de relayage RN fait accès.

11. Dispositif de gestion de mobilité, **caractérisé par** :
une unité de détermination (70) configurée pour déterminer si une cellule en cours d'accès par un noeud de relayage RN est une cellule de stations de base qui prend en charge une fonction de relayage et permet un accès par le noeud de relayage RN, et
une unité d'envoi (90) configurée pour envoyer un message de notification au noeud de relayage RN lorsque la cellule en cours d'accès par le noeud de relayage RN est une cellule de stations de base qui prend en charge une fonction de relayage et permet un accès par le noeud de relayage RN, et lorsque le dispositif de gestion de mobilité prend en charge une fonction de relayage, le message de notification étant utilisé pour indiquer au noeud de relayage RN la fin d'une procédure de détachement du réseau.

12. Dispositif de gestion de mobilité selon la revendication 11, dans lequel :
l'unité de détermination (70) est configurée pour déterminer, en fonction d'informations d'indications transportées dans une demande de détachement du réseau envoyée par le noeud de relayage RN, que la cellule en cours d'accès par le noeud de relayage RN est une cellule de stations de base qui prend en charge une fonction de relayage et permet un accès par le noeud de relayage RN, les informations d'indications étant utilisées pour indiquer que la cellule en cours d'accès par le noeud de relayage RN est une cellule de stations de base qui prend en charge une fonction de relayage et permet un accès par le noeud de relayage RN.

13. Dispositif de gestion de mobilité selon la revendication 11, dans lequel :
le message de notification utilisé pour indiquer au noeud de relayage RN la fin d'une procédure de détachement du réseau comprend une indication de cause, l'indication de cause indiquant qu'une cause de rejet du détachement du réseau du noeud de relayage RN réside en ce que le dispositif de gestion de mobilité prend en charge une fonction de relayage.
